Europäisches Patentamt

European Patent Office

Office européen des brevets

(19)

(11) Veröffentlichungsnummer: **0 173 970**
**A2**

## (12) EUROPÄISCHE PATENTANMELDUNG

(21) Anmeldenummer: **85110905.8**

(22) Anmeldetag: **29.08.85**

(51) Int. Cl.⁴: **A 47 J 37/07**
**A 47 J 36/30**

(30) Priorität: **04.09.84 DE 3432455**
**02.05.85 DE 3515668**

(43) Veröffentlichungstag der Anmeldung:
**12.03.86 Patentblatt 86/11**

(84) Benannte Vertragsstaaten:
**AT BE CH DE FR GB IT LI LU NL SE**

(71) Anmelder: **Erich Schumm GmbH**
**Erich-Schumm-Strasse 2-4**
**D-7157 Murrhardt(DE)**

(72) Erfinder: **Kleemann, Karl-Friedrich**
**Bromersberg 2**
**D-7157 Murrhardt(DE)**

(74) Vertreter: **Patentanwälte Ruff und Beier**
**Neckarstrasse 50**
**D-7000 Stuttgart 1(DE)**

(54) **Kochgerät, insbesondere Grillgerät.**

(57) Ein Kochgerät für Trockenbrennstoff, wie sogenannten Trockenbrennspiritus, weist einen flachen, an der Oberseite von einer Koch– oder Grillplatte (10) begrenzten Brennraum (3) mit mindestens einer Brennstelle auf, die am Anfang einer Verbrennungs-Gasführung liegt, an deren Ende die Einlaßoffnung (27) eines Kamines (6) vorgesehen ist. Sowohl Standfüße (4) mit Traggriffen (5) wie auch der Kamin (6) sind derart umsetzbar bzw. abnehmbar am Gehäuse (2) des Kochgerätes (1) vorgesehen, daß sie in einer Anordnung für den Betrieb als Kochgerät und in der anderen Anordnung für den raumsparenden Transport geeignet sind. Das Kochgerät kann weiterhin einfach für den Betrieb als Räuchergerät oder dgl. umgerüstet werden.

Fig. 1

EP 0 173 970 A2

0173970

Anmelderin:          Erich Schumm GmbH
                     Erich-Schumm-Str. 2 - 4

                     7157 Murrhardt/Württ.


Kochgerät, insbesondere Grillgerät

Die Erfindung betrifft ein vorzugsweise tragbares Kochgerät, insbesondere ein Grillgerät, mit einem Brennraum
für        Brennstoff und mit einer über dem Brennraum
liegenden Kochgutstelle, insbesondere für Trockenbrennstoff.

Grill- bzw. Kochgeräte, die mit Trockenbrennstoff betrieben werden, sind in der Regel so ausgebildet, daß
oberhalb des Brennraumes ein Grillrost vorgesehen ist,
durch welchen die Verbrennungsgase nach oben am Grillgut vorbei abziehen. Dadurch sind solche Geräte weniger
dafür geeignet, mit Trockenbrennstoff betrieben zu werden, dessen Verbrennungsgase geeignet sein könnten, das
Grillgut geschmacklich und hinsichtlich seiner physiologischen Bekömmlichkeit zu beeinträchtigen, obgleich
manche dieser Trockenbrennstoffe den Vorteil haben, daß
sie bei sehr kompakter Stückform einen sehr hohen Heizwert darstellen.

Der Erfindung liegt die Aufgabe zugrunde, ein Kochgerät, insbesondere ein Grillgerät der genannten Art zu schaffen, welches in einfacher Weise für den Betrieb mit vielen Brennstoffarten, insbesondere Trockenbrennstoffe in vorgegebener Stückform, beispielsweise Tablettenform, Plattenform, Blockform, Stäbchenform oder dgl. geeignet ist.

Diese Aufgabe wird bei einem Kochgerät der eingangs genannten Art gemäß der Erfindung dadurch gelöst, daß der Brennraum zwischen einer benachbart zu einer Außenkante der Kochgutstelle liegenden Brennstelle und einer Einlaßöffnung eines die Kochgutstelle nach oben überragenden Kamines eine entlang der Unterseite der Kochgutstelle verlaufende Verbrennungs-Gasführung aufweist. Dadurch brauchen die vom Trockenbrennstoff ausgehenden Flammen nicht die gesamte Kochgutstelle von der Unterseite her zu beschlagen, sondern der Abbrand des Trockenbrennstoffes erfolgt an einer begrenzten Stelle asymmetrisch außerhalb der Mitte der Kochgutstelle und die heißen Verbrennungsgase werden so über den Rest der Unterseite der Kochgutstelle geführt, daß diese im wesentlichen über ihre ganze Ausdehnung gleichmäßig beheizt wird. Die Gase ziehen dann durch den Kamin ab, aus welchem sie hoch über der Kochgutstelle austreten, so daß ihr Strömungsweg stets weit im Abstand vom Kochgut liegt.

Ein sehr guter Zug zur ausreichenden Sauerstoffversorgung des Trockenbrennstoffes sowie zur starken Umspülung der Unterseite der Kochgutstelle mit den Verbrennungsgasen wird erreicht, wenn der Brennraum flach ausgebildet und etwa horizontal angeordnet ist und/oder wenn die Deckwand und die Bodenwand des Brennraumes etwa parallel zueinander liegen. Dadurch wird auch eine sehr kompakte, leicht transportable Ausbildung des Kochgerätes erzielt, so daß dieses einfach als tragbares
Gerät überall hin mitgenommen und verwendet werden
kann. Als Trockenbrennstoff sind insbesondere solche
Brennstoffe geeignet, die in Form eines meist weißen,
zucker- und salzartig aussehenden festen Körpers hergestellt werden.

Damit die Brennstelle, sowohl zum Entzünden des Brennstoffes als auch zum Löschen und ggf. zum Regulieren
der Heizleistung leicht zugänglich ist, liegt die, insbesondere am Boden des Brennraumes vorgesehene, Brennstelle am vorderen Ende des Brennraumes und/oder die
Einlaßöffnung des Kamines an dessen ansonsten geschlossener Rückseite, wobei vorzugsweise der Abstand zwischen
Brennstelle und Einlaßöffnung größer als die Erstreckung
der Brennstelle in Richtung zur Einlaßöffnung ist.

Es hat sich jedoch als vorteilhaft erwiesen, wenn die
Brennstelle annähernd über die ganze Breite des, insbesondere an der Vorderseite über die ganze Breite und/oder
Höhe offenen Brennraumes reicht und vorzugsweise in dieser Breitenrichtung eine größere Erstreckung als quer
dazu hat, so daß durch Verteilen von Brennstoff über die
Breite der Brennstelle eine Art lineare Flammauer erzeugt werden kann, deren Flammen an der Unterseite der
Kochgutstelle in Richtung zur Einlaßöffnung des Kamines
umgelenkt werden und unter der Kochgutstelle entlangschlagen.

Um bei relativ großflächiger Kochgutstelle eine zu breite Ausdehnung der unmittelbar von Flammen und vom Gas beaufschlagten Zone in Breitenrichtung zu vermeiden, ist
es zweckmäßig, wenn der Brennraum seitlich durch mindestens

0173970

eine gegenüber der zugehörigen Seitenbegrenzung der
Kochgutstelle nach innen versetzte Abschirmung begrenzt ist. Der Bereich zwischen dieser Abschirmung
und der Seitenbegrenzung der Kochgutstelle kann dann
durch entsprechende Werkstoffwahl und Werkstoffdicke
durch Wärmeleitung ausreichend erhitzt werden, wobei
die Ausgestaltung auch so getroffen sein kann, daß
dieser Bereich als Warmhaltezone dient, wobei das Kochgut zwischen dieser Warmhaltezone und der im mittleren
Bereich vorgesehenen Bratzone ungehindert durch Verschieben hin und her bewegt werden kann. Bei einer
einfachen Ausführungsform ist die Abschirmung durch
ein vom Brennraum einen Hohlraum abtrennendes Kastenprofil gebildet, welches in dem den Brennraum umschließenden Gehäuse angeordnet ist und vorzugsweise
über die ganze Höhe des Brennraumes reicht.

Durch den Abbrand des Trockenbrennstoffes entstehende
Verschmutzungen können leicht beseitigt werden, wenn
die Brennstelle für die Aufnahme des Trockenbrennstoffes durch eine Flachschale gebildet ist, die vorzugsweise mit Schiebeführungen herausnehmbar in dem
Brennraum angeordnet ist, wobei die jeweilige Schiebeführung in einfacher Weise eine mit Führungsrändern über
die seitlichen Begrenzungen der Brennstelle vorstehende
Bodenplatte und Führungsnuten aufweisen kann, die durch
an den Innenseiten der seitlichen Wände des Brennraumes
befestigte Winkelprofile gebildet sind.

Ein besonders guter Wärmeübergang bei einfacher und gewichtsmäßig leichter Ausbildung des Kochgerätes wird erzielt, wenn die durch eine Kochgutplatte gebildete Kochgutstelle unmittelbar durch eine Wandung des Brennraumes
gebildet ist und/oder wenigstens annähernd dessen Grundriß gleicht.

**0173970**

Insbesondere, wenn die Kochgutstelle zum Grillen geeignet sein soll, ist es zweckmäßig, wenn sie seitlich
und/oder hinten von einem nach oben vorstehenden Rand
begrenzt ist, der vorzugsweise durch Fortsätze der Seitenwandungen und/oder der Rückwand des Brennraumes bzw.
durch einen Randsteg der Kochgutplatte gebildet ist,
so daß eventuell anfallende Bratensäfte oder dgl. nicht
über die Außenzonen der Kochgutstelle abfließen können.

Das Kochgerät kann sehr leicht für unterschiedliche Zubereitungsverfahren umgerüstet werden, wenn die Kochgutstelle durch mindestens eine auswechselbar auf die Oberseite des Brennraumes als dessen obere Wandung auflegbare Platte, insbesondere eine Flachschale gebildet ist.
Zum Beispiel kann in diesem Fall eine Platte eine Kochstelle mit einem Flammen-Durchbruch zum Brennraum aufweisen; diese oder eine andere Platte kann des weiteren
wenigstens auf einem Teilfeld als geschlossene Grillplatte ausgebildet sein, so daß auch eine Ausführung
denkbar ist, bei welcher auf einem mit einem Flammen-
Durchbruch versehenen Teil der Platte gekocht und auf
einem durchgehend geschlossenen, daneben liegenden Teil
gebraten bzw. gegrillt wird.

Ist für die Kochgutstelle eine Abdeckhaube vorgesehen,
welche abnehmbar, insbesondere im Bereich des Randes
der Kochgutplatte aufsteht und der vorzugsweise ein
auf die Kochgutplatte mit Höhenabstand stellbarer Gitterrost zugeordnet ist, so kann das Kochgerät auch zum
Räuchern von Speisen in einfacher Weise verwendet werden.

Eine vorteilhafte Weiterbildung des Erfindungsgegenstandes besteht darin, daß der um eine horizontale Achse
um etwa 180° in zwei Arbeitslagen umschlagbare Brennraum an beiden etwa horizontalen Außenseiten jeweils eine
Kochgutstelle aufweist, wobei vorzugsweise eine Kochgutstelle als Kochstelle für Töpfe, Pfannen oder dgl.
und eine Kochgutstelle als geschlossene Grillplatte ausgebildet ist. Dadurch kann das Kochgerät alternativ an
einer Seite als Kocher und an der anderen Seite als
Grillgerät verwendet werden, wobei das Kochgerät im
wesentlichen lediglich durch Umschlagen um 180° für
die jeweilige Verwendung umgerüstet wird. Die Kochstelle
kann eine durchbrochene Kochgutplatte aufweisen, derart,
daß die vom Trockenbrennstoff ausgehenden Flammen durch
die Durchbrechungen bzw. durch die Durchbrechung hindurchtreten und direkt an das jeweilige Kochgefäß gelangen können.

Es ist zwar denkbar, daß der Kamin stets über beide Kochgutstellen in seiner Höhenrichtung vorsteht oder an dem
Gerät zwischen zwei Einstellungen verschiebbar oder
schwenkbar derart gelagert ist, daß er in einer Stellung
über die eine Kochgutstelle und in der anderen Stellung
über die andere Kochgutstelle vorsteht, jedoch ergibt sich
eine sehr zweckmäßige Ausführungsform, wenn der Kamin in
zwei, jeweils einer der beiden Kochgutstellen zugehörige
Stellungen umsetzbar angeordnet, vorzugsweise anschlagbegrenzt in beide Enden einer Schiebeführung an der Außenseite des Brennraumes derart einsetzbar ist, daß seine
Einlaßöffnung in beiden Stellungen in Deckung mit einer
Öffnung in der zugehörigen Seite des Brennraumes liegt.

Insbesondere, wenn die Kochgutstelle durch auswechselbare
Platten gebildet ist, können die vorteilhaften Wirkungen
auch erreicht werden, ohne, daß der Brennraum in zwei
Arbeitslagen umschlagbar ist. In beiden Fällen ist es
jedoch zweckmäßig, wenn der Kamin in einer Schiebeführung des Brennraumes herausziehbar eingesteckt ist,
so daß zur raumsparenden Unterbringung des Kochgerätes
während des Transportes und zum Aufbewahren der Kamin
entfernt und beispielsweise flach auf das Kochgerät gelegt werden kann.

Der Kamin kann in einfacher Weise durch ein U-Profil mit
nach außen abgewinkelten Profilschenkeln und eine zur
Bildung des am Umfang geschlossenen Kaminschachtes diese Profilschenkel unter Freilassung der Einlaßöffnung
verbindende Deckplatte gebildet sein, welche insbesondere
mit einem unteren, abgewinkelten Endstreifen einen Anschlag für die Auflage auf der jeweiligen Kochgutstelle
bildet, so daß der Kamin einfach in die jeweils gewünschte
Lage überführt werden kann und in dieser Lage sicher hält.
Vorzugsweise sind die Profilschenkel als Gleitleisten
für den Eingriff in seitliche Führungsschlitze des Brennraumes ausgebildet, so daß gesonderte Elemente für die
Schiebeführung nicht erforderlich sind.

Um das Kochgerät sowohl beim Transport, aber auch während
des Betriebes, leicht tragen und durch Festhalten sichern
zu können, sind beiderseits an der Außenseite des Brennraumes Standfüße und/oder Traggriffe vorgesehen, die
vorzugsweise zur Zuordnung zur jeweiligen Kochgutstelle
umsetzbar gehaltert sind, wobei vorzugsweise an der Außenseite des Brennraumes an beiden Enden offene Steckmuffen
für den Eingriff von Steckzapfen der Standfüße und/oder
der Traggriffe vorgesehen sind und die Steckmuffen in
Arbeitslage auf Anschlagschultern der jweils zugehörigen,
miteinander integrierten Standfüße und Traggriffe aufsitzen. Dadurch ist es auch möglich, das Kochgerät im
Stand auf einer empfindlichen Unterlage, beispielsweise einer Tischplatte in beiden Arbeitslagen zu verwenden, ohne, daß die Gefahr einer Beschädigung dieser Unterlage durch Hitzeeinwirkung besteht.

Eine besonders vorteilhafte Weiterbildung des Erfindungsgegenstandes besteht darin, daß beiderseits an der Außenseite des Brennraumes vorgesehene Standfüße gegen die Außenseite des Brennraumes aus der Standstellung schwenkbar gelagert sind, so daß sie, ohne abgenommen zu werden, für den Transport bzw. die Aufbewahrung eng an die Außenseite des Brennraumes geschwenkt werden können. Die Standfüße des Kochgerätes können auch in vorteilhafter Weise, beispielsweise mit unteren Standschenkeln Kupplungsglieder zur formschlüssigen Verbindung des Kochgerätes mit Gegengliedern eines zusammenlegbaren Bodenständers bilden, so daß das Kochgerät wahlweise einerseits als Tischgerät und andererseits als etwa in Tischhöhe stehendes Standgerät zu verwenden ist. Unabhängig hiervon ergibt sich ein sehr sicherer Stand des Kochgerätes bei leichter und raumsparender Bauweise, wenn der jeweilige Standfuß durch zwei, einen gemeinsamen Anschlußschenkel aufweisende, im Winkel zueinander liegende U-förmige, einteilig miteinander ausgebildete Bügel gebildet ist, welche in zwei Ebenen liegen, die im Anschlußschenkel im Winkel aufeinander treffen.

Der Bodenständer kann bei leichter Bauweise und sicherem Stand zwei in Seitenansicht mehrfach entgegengesetzt abgewinkelte, beispielsweise S-förmige Seitenstützen aufweisen, deren obere rohrförmige, etwa horizontale Endschenkel als Steckbuchsen für die Standschenkel der Standfüße des Brennraumes ausgebildet sind und die über gelenkige Streben, insbesondere eine lösbare Scherenverstrebung zusammenlegbar miteinander verbunden sind.

Sowohl die Standfüße des Brennraumes als auch der Bodenständer können mindestens eine Halterung für eine abnehmbare Ablageplatte oder dgl. bilden, so daß neben und/oder
unter dem Brennraum Stauraum für Kochutensilien oder dgl.
gegeben ist. Die Ablageplatte kann beispielsweise ein
zwischen den Seitenstützen des Bodenständers liegendes
Tablett oder eine in Draufsicht seitlich über den Brennraum vorstehende Ablagekonsole oder dgl. sein, wobei im
letzteren Fall die Halterung zweckmäßig durch zwei übereinanderliegende Schenkel der Standfüße des Brennraumes
bzw. der jeweiligen Seitenstütze des Bodenständers gebildet ist. Um bei seitlich vorstehender Anordnung der
Ablageplatte eine sehr sichere Abstützung zu gewährleisten,
weist diese, beispielsweise als Ablagekonsole ausgebildete
Ablageplatte ein Formschlußglied für die umgreifende Auflage auf einem etwa horizontalen Schenkel eines Standfußes bzw. einer Seitenstütze und einen Strebenrahmen mit
einem Formschlußglied für den lösbaren Anschluß an einem
darunterliegenden Schenkel auf, wobei dieser Strebenrahmen zweckmäßig gegen die Unterseite der Ablagekonsole
schwenkbar ist, um im Falle des Nichtgebrauches eine raumsparende Unterbringung zu ermöglichen.

Insbesondere zur Versteifung der Kochgutstelle kann diese
als mit Sicken oder ähnlichen Profilierungen versehene
Platte und/oder als dicke Platte beispielsweise aus Aluminium und/oder als schwarz beschichtete Platte und/oder
als Blech- bzw. Gußplatte ausgebildet sein, wobei bei
jeder Ausbildung die Neigung der Platte, unter Hitzeeinwirkung zu verziehen, verringert ist; bei einer einfachen Ausführungsform kann die Platte beispielsweise
eloxiert sein.

Diese und weitere Merkmale von bevorzugten Weiterbildungen
der Erfindung gehen auch aus der Beschreibung und den
Zeichnungen hervor, wobei die einzelnen Merkmale jeweils
für sich allein oder zu mehreren in Form von Unterkombinationen bei einer Ausführungsform der Erfindung und
auf anderen Gebieten verwirklicht sein können. Ausführungsbeispiele der Erfindung sind in den Zeichnungen dargestellt und werden im folgenden näher erläutert. In den
Zeichnungen zeigen:

Fig. 1    ein erfindungsgemäßes Kochgerät in Vorderansicht,

Fig. 2    das Gerät gemäß Figur 1 in Draufsicht,

Fig. 3    einen Ausschnitt der Figur 1 in vergrößerter
          Darstellung,

Fig. 4    einen Ausschnitt der Figur 2 in vergrößerter
          Darstellung,

Fig. 5    das Kochgerät gemäß Figur 1 in um 180° gewendeter und umgerüsteter Arbeitslage,

Fig. 6    eine weitere Ausführungsform in Darstellungen
und  7    entsprechen den Figuren 1 und 2

Fig. 8    das Kochgerät gemäß Figur 6 in Seitenansicht,

Fig. 9    eine weitere Ausführungsform eines Kochgerätes in Vorderansicht,

Fig. 10   das Kochgerät gemäß Figur 9 in teilweise
          aufgeschnittener Draufsicht,

Fig. 11   das Kochgerät gemäß Figur 9 in Seitenansicht,

Fig. 12   ein Ausschnitt der Figur 9 in vergrößerter,
          teilweise geschnittener Darstellung und bestückt mit zusätzlichen Bauteilen,

Fig. 13   ein Ausführungsbeispiel einer Kochgutplatte
          in Draufsicht,

Fig. 14    die Kochgutplatte gemäß Figur 13 in
           teilweise geschnittener Ansicht auf
           eine Längsseite,

Fig. 15    die Kochgutplatte gemäß Figur 13 in
           teilweise geschnittener Ansicht auf
           eine Schmalseite,

Fig. 16    ein Ausführungsbeispiel eines Bodenständers in Seitenansicht,

Fig. 17    der Bodenständer gemäß Figur 16 in
           Vorderansicht,

Fig. 18    eine Verbindungsmuffe der Bodenständer
           gemäß den Figuren 16,17,20 und 23,24
           in Seitenansicht,

Fig. 19    die Verbindungsmuffe gemäß Figur 18 in
           Draufsicht,

Fig. 20    der Bodenständer gemäß den Figuren 16
           und 17, jedoch in der Umrüstung als
           Regal- bzw. Tablettständer,

Fig. 21    eine Ablagekonsole gemäß Figur 17 in
           vergrößerter, geschnittener Darstellung,

Fig. 22    die Ablagekonsole gemäß Figur 21 in
           Draufsicht und zusammengeklappten
           Zustand,

Fig. 23    eine weitere Ausführungsform eines
           Bodenständers in Seitenansicht,

Fig. 24    der Bodenständer gemäß Figur 23 in Vorderansicht.

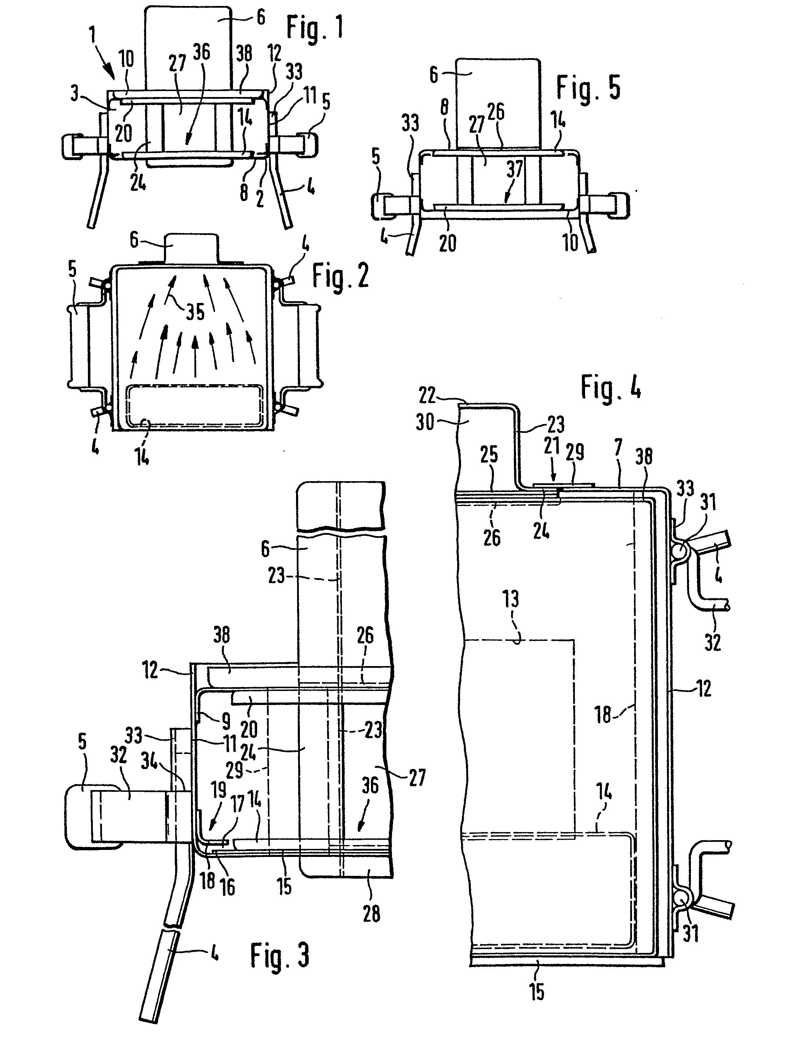

Wie die Figuren 1 bis 4 zeigen, weist ein erfindungsgemäßes Kochgerät 1 ein kastenförmiges, rechtwinklig begrenztes Gehäuse 2 auf, welches einen Brennraum 3 umschließt und an dessen Außenseiten links und rechts jeweils zwei Standfüße 4 und ein Traggriff 5 lösbar bzw. aussteckbar angebracht sind. An der Rückseite ist an dem Gehäuse 2 ein Kamin 6 durch eine Steckverbindung lösbar befestigt, wobei dieser Kamin 6 im wesentlichen nur über die Oberseite des Gehäuses 2, und zwar um mehr als dessen Höhe, vorsteht.

Das Gehäuse 2 ist durch einen flach U-förmigen Blechteil, eine nahe bei den Enden von dessen Schenkeln zwischen diese parallel zum U-Quersteg eingesetzte Platte und eine geteilte Rückwand 7 gebildet, welche durch zunächst frei ausragende hintere abgewinkelte Endabschnitte der aufrechten Schenkel des U-förmigen Blechteiles gebildet sein kann. Der U-Quersteg des U-förmigen Blechteiles bildet eine zur Standebene des Kochgerätes 1 parallele, im wesentlichen rechteckige Kochplatte 8, während die zwischen die Schenkel des U-förmigen Blechteiles eingesetzte und mit zum Quersteg dieses Blechteiles abgewinkelten Randstreifen an den Innenseiten der Schenkel des U-förmigen Blechteiles befestigte Platte eine geschlossene Grillplatte 10 bildet. Die U-Schenkel bilden sowohl die Seitenwände 11 des Gehäuses 2 als auch die seitlichen Teile eines über die Grillplatte 10 geringfügig vorstehenden Randes, der an der Rückseite in Übereinstimmung mit der Rückwand 7 geteilt ist, während die Vorderseite der Grillplatte 10 von einem solchen Rand frei, also in der Ebene ihres Oberflächenniveaus zugänglich ist.

Der im Grundriss etwa quadratische Brennraum 3, dessen Höhe etwa ein Drittel seines Kantenmaßes entspricht, ist an der Vorderseite des Gehäuses 2 über seine ganze Breite und Höhe frei zugänglich offen. An der Innenseite der Kochplatte 8, die etwa im Zentrum einen großen, fensterartigen, beispielsweise quadratischen Durchbruch 13 aufweist, ist als Brennschale eine Flachschale 14 vorgesehen,
die annähernd über die ganze Breite des Brennraumes 3
reicht und in Tiefenrichtung des Brennraumes 3 eine
gegenüber dessen Tiefe nur etwa ein Viertel so große
Erstreckung hat. Diese Flachschale 14 ist mit ihrem
Boden auf einer ebenen, beispielsweise aus Blech bestehenden Bodenplatte 15 befestigt, deren Größe annähernd
der Größe der Kochplatte 8 entspricht und die mit seitlichen Führungsrändern über die seitlichen Begrenzungen
der Flachschale 14 vorsteht. Die Führungsränder 16 greifen in seitliche Führungsnuten 17 ein, welche jeweils
durch ein an der Innenseite der zugehörigen Seitenwand
11 befestigtes Winkelprofil 18 gebildet sind, dessen von
der Seitenwand 11 nach innen abstehender Profilschenkel
die eine Seitenbegrenzung der Führungsnut 17 bildet,
während deren andere Seitenbegrenzung unmittelbar durch
die Kochplatte 8 gebildet ist. Die Randstreifen 16 haben
in der Führungsnut 17 in Höhenrichtung ein verhältnismäßig
großes Bewegungsspiel. Durch die Führungsränder 16 und
die Führungsnuten 17 sind zwei seitliche Gleit- bzw.
Schiebeführungen 19 geschaffen, in welchen die Flachschale
14 parallel zur Kochplatte 8 aus der offenen Seite des
Brennraumes 3 herausgezogen und entsprechend umgekehrt
wieder eingeschoben werden kann. Die Flachschale 14 ist
benachbart zu einer Querkante der Bodenplatte 15 an dieser
befestigt, derart, daß bei eingeschobener Bodenplatte 15
diese an der Rückwand 7 anstößt und dann die Flachschale
14 unmittelbar benachbart zur vorderen offenen Seite des
Brennraumes 3 liegt. Die Bodenplatte 15 verschließt dabei den Durchbruch 13.

An der Innenseite der Grillplatte 10 ist ebenfalls eine
Flachschale 20 befestigt, die in Form, Abmessungen und Anordnung der Flachschale 14 entspricht, jedoch starr,
d.h. unlösbar an der Innenseite der Grillplatte 10 befestigt ist.

Der Kamin ist ebenfalls in Schiebeführungen 21 des Gehäuses 2 gehaltert, die vertikal und parallel zur Rückwand 7 vorgesehen sind. Der Kamin 6 ist im wesentlichen
durch ein U-Profil 22 gebildet, dessen Profilschenkel 23
in nach außen abgewinkelte und in einer gemeinsamen Ebene
liegende Randstreifen 24 übergehen, an deren vom Profilquersteg abgekehrte Seiten eine Deckplatte 25 befestigt
ist, die nur über einen Teil der Höhe des Kamines reicht.
Diese Deckplatte 25 reicht vom oberen Ende des Kamines 6
bis in Höhe der jeweils zur Verwendung anstehenden Kochgutstelle, nämlich entweder der Grillplatte 10 oder der
Kochplatte 8 und geht in dieser Höhe in einen vom Kamin 6
weggerichteten Endstreifen über, der einen Anschlag 26
bildet. Unterhalb dieses Anschlages 26 ist das U-Profil
22 zwischen den Profilschenkeln 23 zur Bildung einer Einlaßöffnung 27 frei gelassen; lediglich am unteren Ende
sind die Profilschenkel 23 bzw. die Randstreifen 24 durch
einen schmalen Deckstreifen 28 miteinander verbunden,
welcher die untere Begrenzung der Einlaßöffnung 27 bildet.

Zur Bildung der Schiebeführungen 21 ist an den Außenseiten der seitlichen Teile der Rückwand 7 jeweils
ein über deren einander zugekehrte Begrenzungskanten
vorstehender Führungsstreifen 29 befestigt, welcher
mit den hinteren Kanten der Platten 8,10 eine Führungsnut begrenzt, in welche der jeweils zugehörige Randstreifen 24 mit dem diesen überlappenden Randstreifen
der Deckplatte 25 verschiebbar eingreift. Der Kaminschacht 30, der an der Unterseite verschlossen ist,
ist für den Rauch- bzw. Verbrennungs-Austritt nur an der oberen Endlfäche offen.

Die beiden, auf jeder Seite des Gehäuses 2 vorgesehenen,
geringfügig schräg nach innen geneigten Standfüße 4
sind jeweils mit dem zugehörigen Traggriff 5 zu einem
in sich formstabilen Bauteil verbunden. Die Standfüße 4 sind durch gebogene Drahtabschnitte gebildet,
die jeweils oberhalb des Traggriffes 5 einen nach oben
vorstehenden Steckzapfen 31 bilden, wobei die beiden
Steckzapfen 31 parallel zueinander und in einer gemeinsamen, zur Längsrichtung des bügelförmigen Traggriffes
parallelen Axialebene liegen. Unmittelbar unterhalb
der Steckzapfen 31 ist der jeweilige Traggriff 5 mit
mehrfach abgewinkelten Blech-Haltern 32 derart an den
Standfüßen 4 befestigt, daß er parallel zur zugehörigen
Seitenwand 11 und horizontal mit Abstand von dieser
Seitenwand 11 liegt. Zur Aufnahme der Steckzapfen 31
sind an der Außenseite jeder Seitenwand 11 zwei benachbart zu deren vorderen und hinteren Ende liegende,
schellenförmige Steckmuffen 33 befestigt. Die Steckmuffen 33 sitzen unter dem Gewicht des Kochgerätes
auf Anschlagschultern 34 auf, welche im Übergangsbereich
in die Standfüße 4 durch die Halter 32 gebildet sind.

In den Figuren 1 bis 4 ist die Aufstellung des Kochgerätes als Grillgerät dargestellt. Die durch die Flachschale 14 gebildete Brennstelle 36 liegt unter dem
vorderen Ende der Grillplatte 10, auf die eine annähernd
ihrer gesamten Größe entsprechende flache Grillschale 38
abhebbar aufgesetzt werden kann. Nach Entzünden des in
der Flachschale 14 anzuordnenden Trockenbrennstoffes
beschlagen dessen Flammen die Unterseite der Grillplatte
10 und die heißen Verbrennungsgase strömen entlang der
Unterseite der Grillplatte 10 in einer durch den Brennraum 3 gebildeten, in Figur 2 anhand der Pfeile angedeuteten Gasführung 35 in Richtung zur Einlaßöffnung 27
des Kamines 6, aus dessen oberen Ende sie dann abziehen.
Durch Herausziehen der Standfüße 4 mit den Traggriffen 5
aus den Steckmuffen 33, Umdrehen des Gehäuses 2 und
Wiedereinsetzen der Steckzapfen 31 von unten in die
Steckmuffen 33, sowie durch Umsetzen des Kamines 6 von
der Seite der Kochplatte 8 her, wird das Gerät in die Anordnung gemäß Figur 5 überführt, in welcher es zum Kochen
geeignet ist. Nunmehr liegt die durch die Flachschale 20
gebildete Brennstelle 37 unter der an der Oberseite des
Gehäuses 2 liegenden Kochplatte 8, auf welcher mit üblichem Kochgeschirr, beispielsweise Kochtöpfen, Bratpfannen
oder dgl. gekocht werden kann. Um die Heizleistung an
der Kochplatte 8 zu erhöhen, kann die Flachschale 14 mit
der zugehörigen Bodenplatte 15 aus dem Brennraum 3
herausgezogen werden, wodurch der Durchbruch 13 frei wird,
so daß die Flammen im Bereich des Durchbruches 13 unmittelbar den Boden des Kochgeschirres beschlagen. Der Durchbruch 13 reicht in Draufsicht gemäß Figur 4 bis in den Bereich der jeweiligen Flachschale.

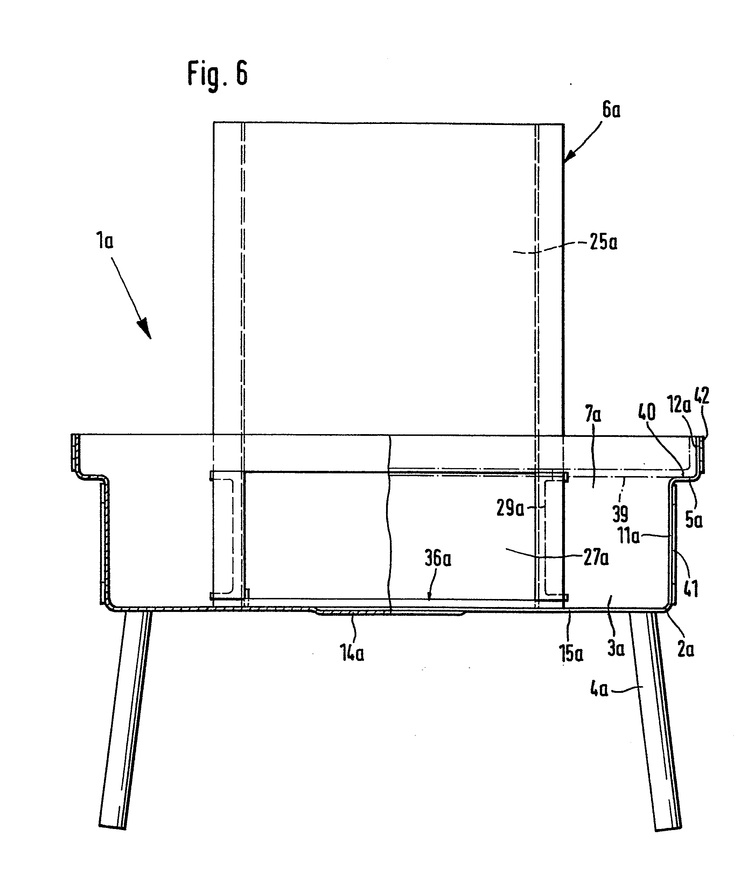

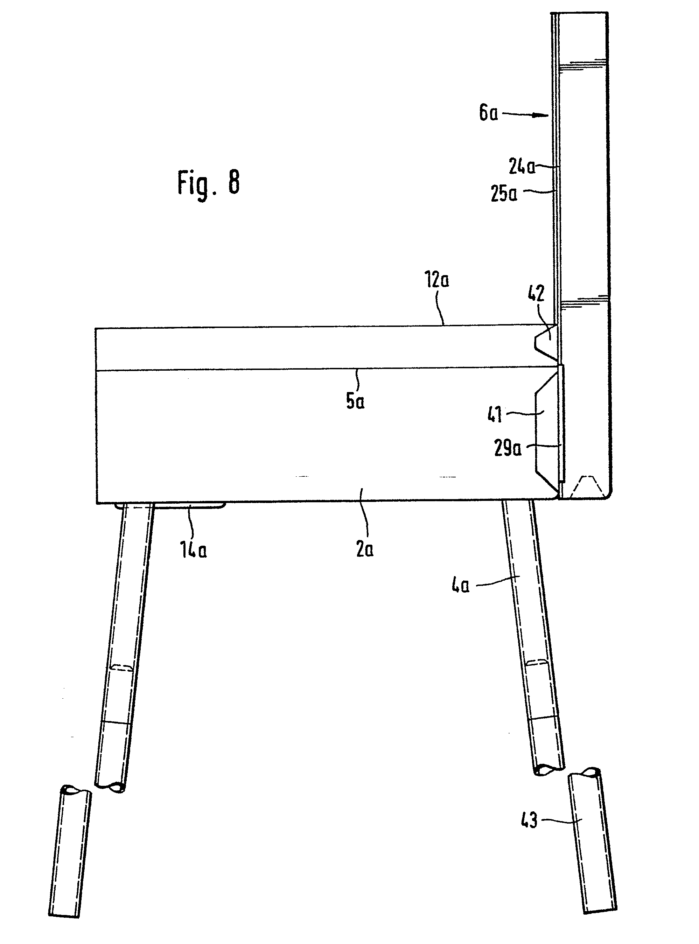

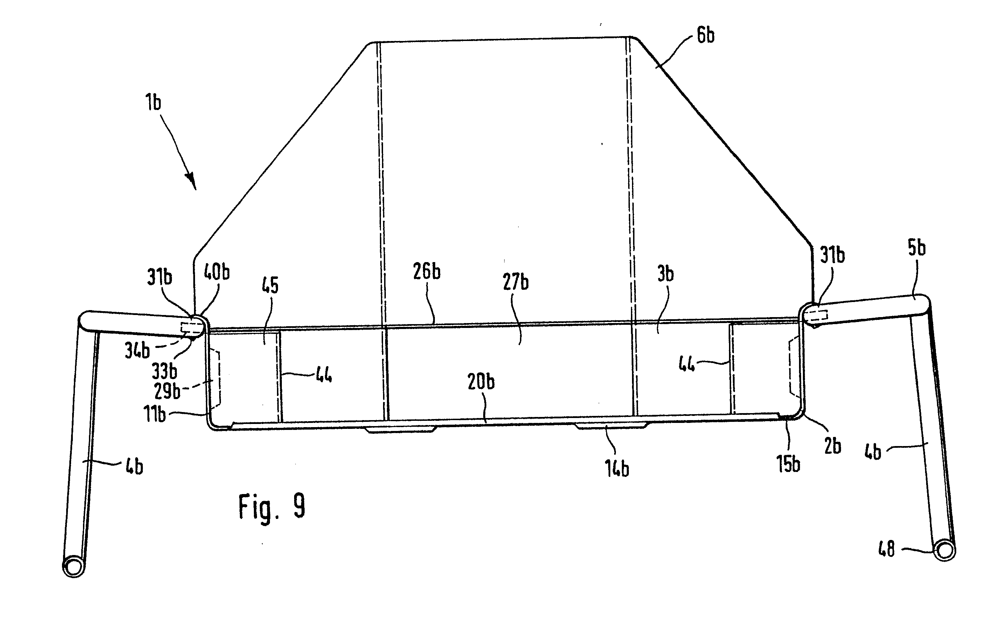

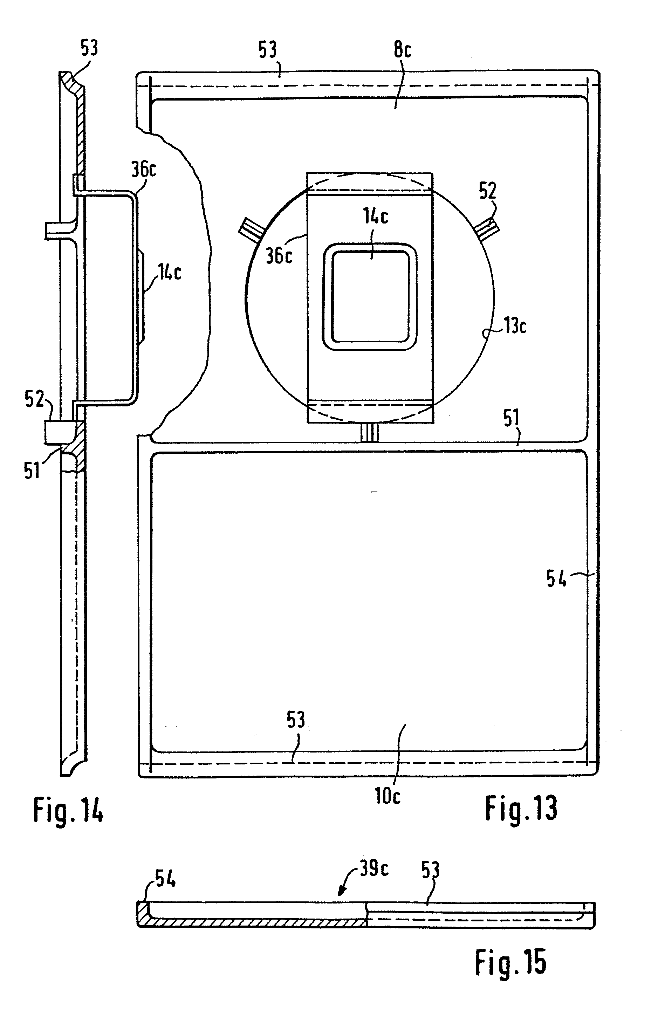

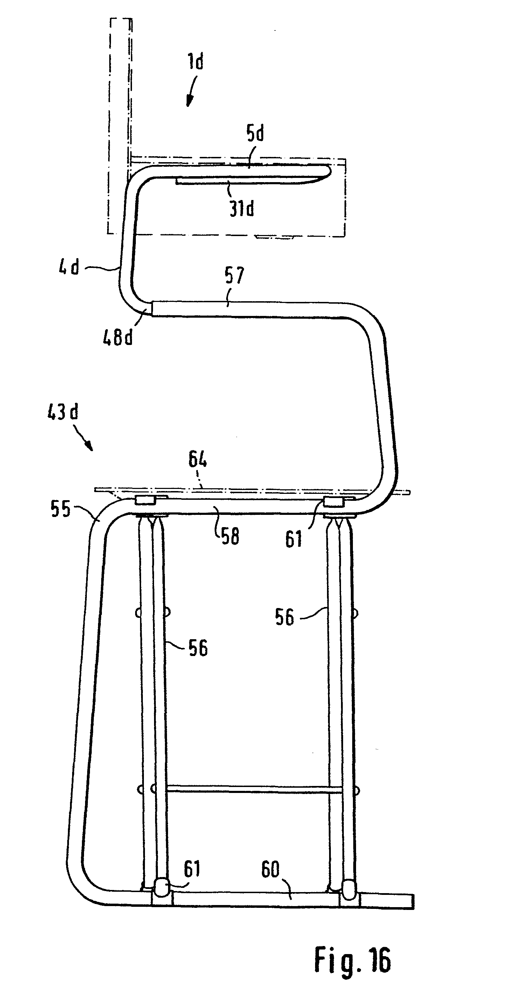

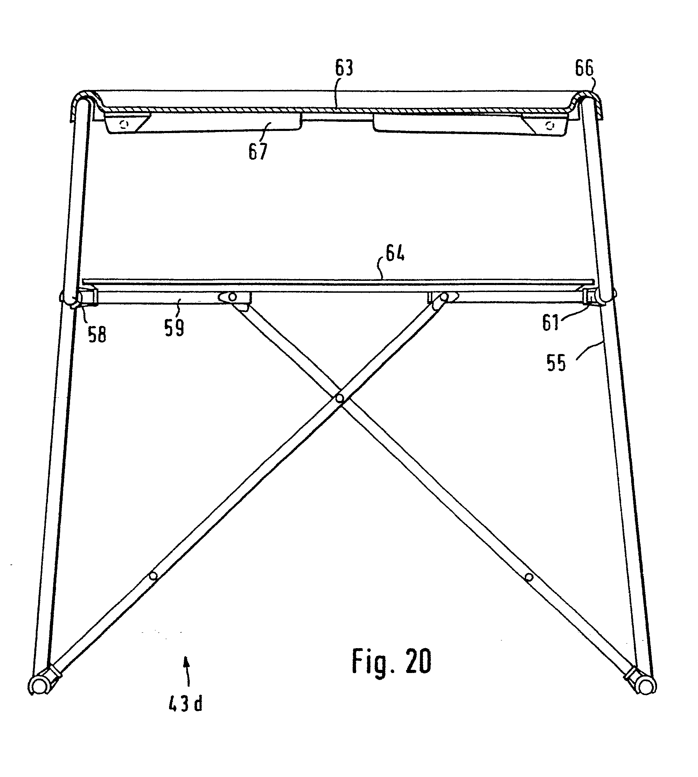

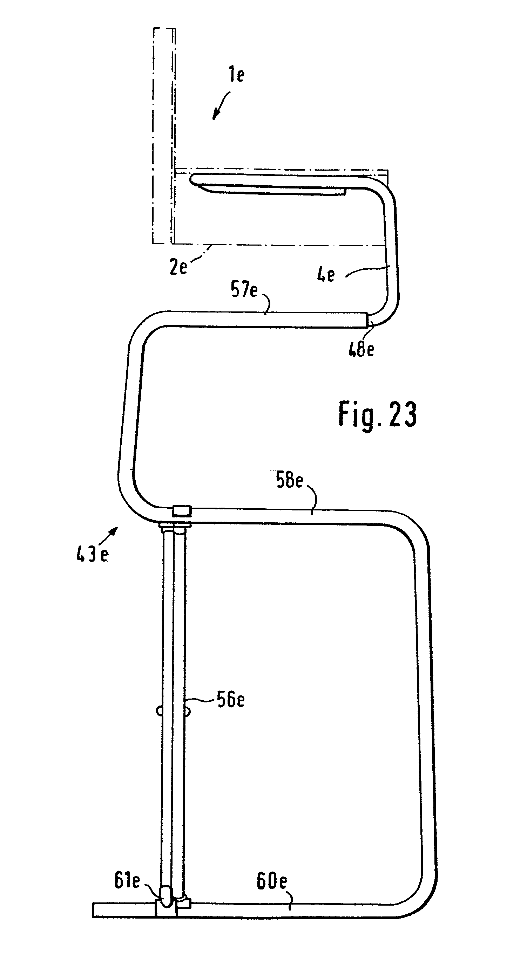

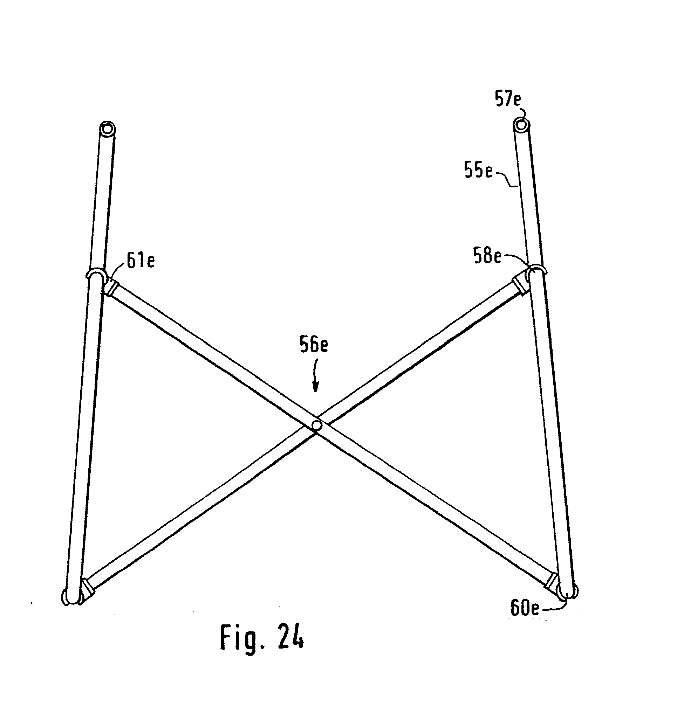

In den Figuren 6 bis 24 sind für einander entsprechende Teile
die gleichen Bezugszeichen wie in den übrigen Figuren, jedoch in den Figuren 6 bis 8 mit dem Index "a", in den
Figuren 9 bis 12 mit dem Index "b", in den Figuren 13 bis
15 mit dem Index "c", in den Figuren 16 bis 22 mit dem
Index "d" und in den Figuren 23 und 24 mit dem Index "e"
verwendet.

Das Kochgerät 1a gemäß den Figuren 6 bis 8 ist so gestaltet,
daß es zur Umrüstung auf Koch- bzw. Grillbetrieb nicht als
ganzes umgedreht, sondern lediglich eine die obere Wandung
des Brennraumes 3a bildende, flachschalenförmige Platte 39
ausgewechselt wird. Diese Platte 39 weist für den Kochbetrieb, also wenn Speisen in Töpfen, Pfannen oder dgl. zubereitet werden, einen in ihrem Zentrum liegenden großflächigen Durchbruch 13a auf, der zweckmäßig kreisrund ist und
dessen Erstreckung in Richtung zwischen der Vorderseite
des Brennraumes 3a und der Einlaßöffnung 27a zweckmäßig
größer als zwei Drittel der zugehörigen Erstreckung des
Brennraumes 3a ist. Dadurch beschlagen die Flammen des
Trockenbrennstoffes unmittelbar die Unterseite des Kochgefäßes, so daß ein sehr guter Wärmeübergang gewährleistet
ist. Für den Grillbetrieb wird zweckmäßig die Oberseite des
Brennraumes mit einer Flachschale abgedeckt, die im wesentlichen gleiche Form wie die Platte 39 aufweist, deren
Bodenplatte jedoch durchgehend geschlossen ist, so daß
das Grillgut unmittelbar auf dieser Flachschale gebraten
werden kann und trotzdem nicht mit Verbrennungsgasen in
Kontakt gelangt. Als Trockenbrennstoff hat sich insbesondere der seit Jahrzehnten unter dem Warenzeichen "Esbit"
bekannte Brennstoff bewährt.

Das den Brennraum 3a begrenzende Gehäuse 2a weist eine Bodenwand 15a auf, die mit den Seitenwänden 11a aus einem durchgehenden Blechstück gebogen ist. Ein weiteres, einteilig
gebogenes und von der Einlaßöffnung 27a durchbrochenes
Blechstück bildet die Rückwand 7a. Die Seitenwände 11a sind
im Bereich der oberen Begrenzung des Brennraumes 3a jeweils
rechtwinklig nach außen abgewinkelt, derart, daß seitlich
schmale Innen-Schultern 40 gebildet sind, welche an ihren
äußeren Begrenzungen in die seitlichen, nach oben stehenden Ränder 12a übergehen. Die Innen-Schultern 40 dienen
zur beidseitigen Auflage der zugehörigen Randbereiche
der Platte 39, die bis an die Innenseite der Rückwand 7a
reicht und dadurch den Brennraum 3a nach oben auch im Bereich der Rückwand 7a verschließt. An ihren benachbart
zu den Außenseiten der Seitenwände 11a liegenden Unterseiten bilden die Innen-Schultern 40 Traggriffe 5a zum Untergreifen und Tragen des Kochgerätes, so daß auf gesonderte Traggriffe verzichtet werden kann. Die in Ansicht im wesentlichen T-förmige und dadurch an die Frontansicht des Gehäuses 2a angepaßte Rückwand 7a weist an jeder Seite zwei übereinanderliegende, gegeneinander versetzte Randlaschen 41,42 auf, die nach vorne abgewinkelt sind, wobei die beiden unteren Randlaschen 41 an den Außenseiten der Seitenwände 11a und die beiden oberen Randlaschen 42 an den Außenseiten der Ränder 12a, beispielsweise durch Punktschweißung, befestigt sind. Die von der Rückwand 7a allseits begrenzte Einlaßöffnung 27a ist an beiden Seiten von Führungsstreifen 29a begrenzt, die gegenüber der übrigen Ebene der Rückwand 7a um die Dicke des Kamines 6a im Bereich der Randstreifen 24a durch Abköpfung nach außen versetzt sind, so daß sie Schiebeführungen 21a für den lösbaren Eingriff des Kamines 6a bilden. Der Kamin 6a ist so bemessen, daß er vollständig im Brennraum bzw. zwischen den Seitenwänden 11a auf der Bodenwand 15a untergebracht und dadurch für den Transport des Kochgerätes ohne zusätzlichen Raumbedarf verstaut werden kann.

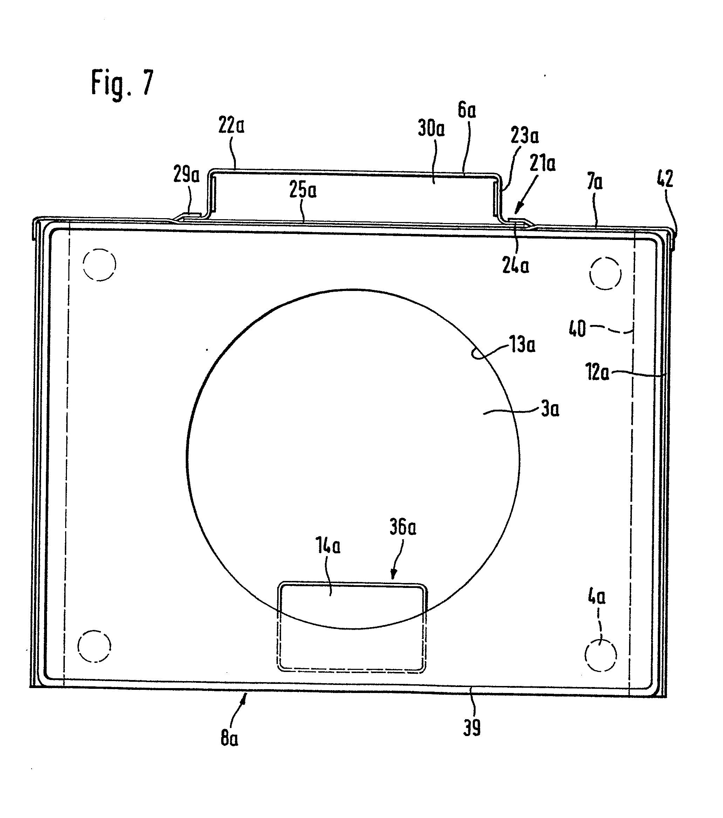

Die Brennstelle 36a ist durch eine aus der Bodenwand 15a herausgeprägte, flachschalenförmige Vertiefung 14a gebildet, welche im wesentlichen länglich rechteckig begrenzt ist und mit einer der längeren Begrenzungskanten unmittelbar benachbart zur Vorderseite des Gehäuses 2 liegt. In Draufsicht gemäß Figur 7 reicht die Brennstelle 36a etwa mit der Hälfte ihrer zugehörigen Erstreckung bis in den Bereich des Durchbruches 13a. Die Erstreckung der Brennstelle 36a zwischen den Seitenwänden 11a beträgt nur etwa ein Viertel des Abstandes zwischen diesen Seitenwänden 11a und nur etwa die Hälfte der zugehörigen Erstreckung der Einlaßöffnung 27a, wodurch eine besonders günstige Verbrennungs-

0173970

Gasführung erzielt wird. Wie insbesondere Figur 7 zeigt, beträgt die Breite des Kamines 6a ein mehrfaches von dessen Erstreckung in Richtung rechtwinklig zur Rückwand 7a, wobei die Breite des Kamines 6a etwa halb so groß wie die des Brennraumes 3a sein kann, so daß der Kamin 6a im Betriebszustand nur sehr wenig über die Rückseite des Gehäuses 2a vorsteht.

Das Kochgerät ist zweckmäßig mit vier Standfüßen 4a in Form beispielsweise von Rohrabschnitten versehen, die lösbar beziehungsweise steckbar oder fest in den Eckbereichen an der Bodenwand 15a befestigt sein können. Die Standfüße 4a sind von einer Länge, daß das Kochgerät als Tischgerät geeignet ist, d.h. beim Aufstellen auf einer üblichen Tischplatte eine günstige Arbeitshöhe einnimmt. Zur Verwendung als Standgerät, bei welchem das Kochgerät selbst unmittelbar auf dem Fußboden aufsteht, können Verlängerungsfüße 43 vorgesehen sein, die in die unteren Enden der Standfüße 4a lösbar eingesteckt werden können.

Bei der Ausführungsform gemäß den Figuren 9 bis 12 ist das Gehäuse 2b durch einen in Vorderansicht U-förmigen Blechteil gebildet, der an der Rückseite des Brennraumes 3b im wesentlichen ausschließlich vom Kamin 6b verschlossen ist. Die von den aufrechten, durch die U-Schenkel gebildeten Seitenwänden 11b etwa rechtwinklig abgewinkelten Führungsstreifen 29b der Schiebeführungen 21b schließen unmittelbar an die Seitenwände 11b an; entsprechend reichen die Randstreifen 24b des Kamines 6b sowie die Deckplatte 25b im wesentlichen über die gesamte Breite des Brennraumes 3b bzw. des Gehäuses 2b, wodurch die Rückseite des Brennraumes 3b bis auf die Einlaßöffnung 27b des Kamines 6b verschlossen ist. Die oberen Enden der Seitenwände 11b sind teilkreisförmig nach außen gekrümmt und auf einem mittleren Teil der Länge der Seitenwände 11b über einen Bogenwinkel von
mehr als 180° zu annähernd zylindrischen, an den Außenseiten der Seitenwände 11b liegenden Steckmuffen 33b geformt. Die Oberseiten dieser nach außen gekrümmten Abschnitte der Seitenwände 11b bilden die Auflage-Schultern
40b für die jeweilige Platte 39b. Im hinteren Bereich des
Gehäuses 2b sind diese Schultern 40b auch für die Auflage
von Gegenschultern des Kamines 6b vorgesehen, das im Bereich der Schiebeführungen 21b geringfügig schmaler als
im Bereich oberhalb des durch die Deckplatte 25b gebildeten
Anschlages 26b ist. Dieser nach vorne vorstehende, stegförmig über die Breite des Gehäuses 2b durchgehende Anschlag 26b, der etwa in der gemeinsamen Axialebene der
Steckmuffen 33b liegt, dient ebenfalls als Auflager für
die jeweilige Platte 39b und untergreift hierfür deren
Boden.

An die Innenseite jeder Seitenwand 11b anschließend ist
im Gehäuse 2b jeweils ein in Draufsicht rechtwinkliges,
annähernd C-förmiges Kastenprofil 45 derart angeordnet,
daß sein Quersteg eine gegenüber der zugehörigen Seitenwand 11b nach innen versetzte und zu dieser Seitenwand 11b
parallele seitliche Abschirmung 44 des Brennraumes 3b
bildet, so daß der Brennraum 3b also schmaler als das Gehäuse 2b, jedoch gegenüber der Einlaßöffnung 27b breiter
ist. Die Abschirmungen 44 reichen im wesentlichen über
die gesamte Höhe des Brennraumes 3b, also von dessen Bodenwand 15b bis annähernd an die Unterseite des Anschlages 26b
und begrenzen beiderseits des Brennraumes 3b liegende Hohlräume 46. Die Bodenplatte 15b kann an der Vorderseite
einen nach oben abgewinkelten Randstreifen 20b aufweisen,
so daß sie an der Vorderseite nach Art einer Flachschale
begrenzt ist. Der Anschlag 26b kann zur Lagebegrenzung des
Kamins 6b auch auf den Kastenprofilen 45 aufsitzen.

Die Standfüße 4b des Kochgerätes 1b sind bügelförmig aus
Rohr gebogen und in Vorderansicht annähernd rechtwinklig
winkelförmig, wobei in Standstellung gemäß den Figuren
9 bis 11 der obere Winkelschenkel U-förmig mit nebeneinanderliegenden Schenkeln und der nach unten anschließende
Winkelschenkel U-förmig mit übereinanderliegenden Schenkeln
ausgebildet ist. Die beiden Winkelschenkel gehen über einen
Anschlußschenkel 5b ineinander über, welcher einen U-Schenkel beider U-förmigen Abschnitte des jeweiligen Standfußes
4b bildet. Der freie Schenkel des oberen Winkelschenkels
jedes Standfußes 4b bildet einen Steckzapfen 31b für den
schwenkbaren Eingriff in die zugehörige Steckmuffe 33b.
In jedem Steckzapfen 31b sind ein oder mehrere diametral
angeordnete Anschlagbolzen 34b angeordnet, welche in Standstellung zur Mitte des Brennraumes 3b über den jweiligen
Steckzapfen 31b vorstehen und in Standstellung jeweils an
einer Anschlagfläche 47 der zugehörigen Seitenwand 11b anliegen; diese Anschlagflächen 47 sind durch die Endflächen
von Querschlitzen gebildet, welche in den oberen abgewinkelten Enden der Seitenwände 11b vorgesehen sind. In Standstellung sind die aufrechten, mit ihren unteren U-Schenkeln
die Standschenkel 48 der Standfüße 4b bildenden Winkelschenkel in Vorderansicht geringfügig nach innen geneigt,
so daß also das Gehäuse 2b frei zwischen den seitlich nach
außen versetzten Standschenkeln 48 hängt. Die Steckzapfen
31b können sowohl von vorne als auch von hinten in die
Steckmuffen 33b eingeführt sein, so daß die Standschenkel
48 entweder frei nach vorne oder frei nach hinten stehen.
Die Anschlußschenkel 5b bilden zumindest in Standstellung
gleichzeitig die Traggriffe des Kochgerätes. Aus der Standstellung können die Standfüße 4b derart gegen das Gehäuse
2b geschwenkt werden, daß sie eng anliegend mit einem
Winkelschenkel jeweils an der Außenseite der zugehörigen
Seitenwand 11b und mit dem anderen Winkelschenkel an der

0173970

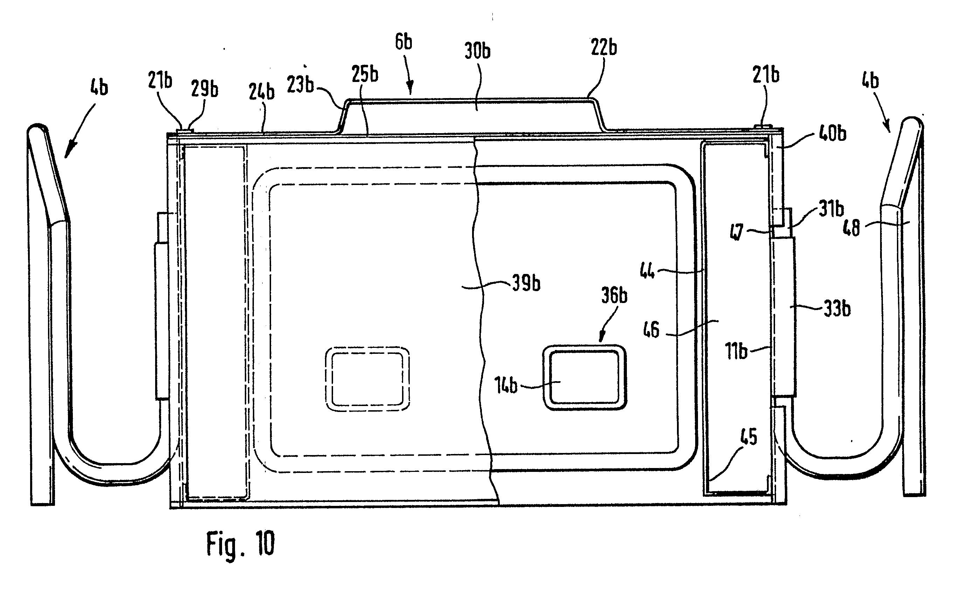

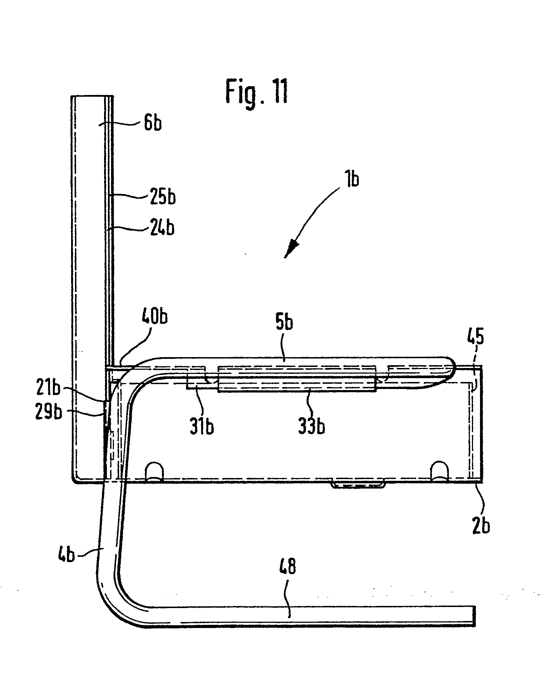

Unterseite der Bodenplatte 15b raumsparend angeordnet sind.
Die Anschlagbolzen 34b sind in den Figuren 10 und 11 der
Übersichtlichkeithalber nicht dargestellt.

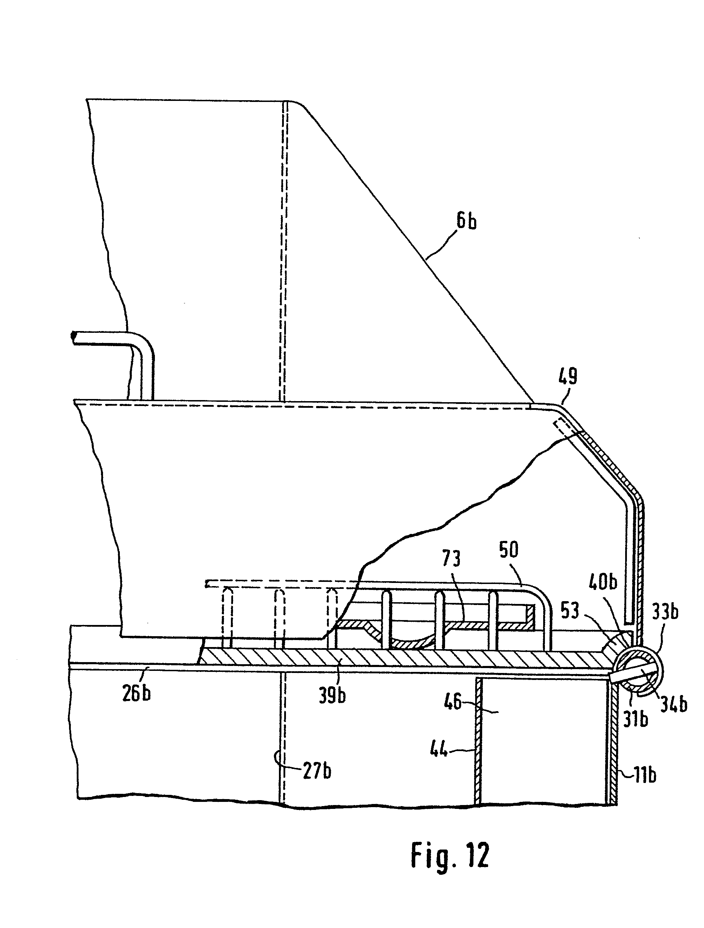

In Figur 12 ist ein Räucheraufsatz für die Kochgut-Platte
39b dargestellt, welcher zweckmäßig eine an der Oberseite
mit einem Traggriff versehene Abdeckhaube 49 für die gesamte, flachschalenförmige Platte 39b und einen Gitterrost
50 aufweist, der mit Standfüßen innerhalb der Abdeckhaube
49 auf die Platte 39b gestellt werden kann. Die Abdeckhaube
49 steht zweckmäßig mit den unteren Kanten ihrer seitlichen
Wände unmittelbar benachbart zur Platte 39b auf den Schultern 40b der Seitenwände 11b auf, so daß sie wackelfrei
nur im Bereich ihrer beiden einander gegenüberliegenden
Seitenwände abgestützt, durch die Platte 39b gegen seitliche Verschiebungen gesichert und so auf der Platte 39b
angeordnet ist, daß sie deren Rand allseits an der Außenseite übergreift.

Die Kochgut-Platte 39c gemäß den Figuren 13 bis 15 ist
rechtwinklig zur Vorderseite des Kochgerätes in zwei im
wesentlichen gleich große Teilfelder, nämlich in eine Kochstelle 8c und in eine Brat- bzw. Grillstelle 10c unterteilt, wobei zwischen den beiden Teilfeldern der am Rand
schalenförmig begrenzten Platte 39c ein Mittelsteg 51 vorgesehen ist. Die Kochstelle 8c weist etwa in der Mitte des
Feldes bzw. etwa um die Breite des jeweiligen Kastenprofiles 45 nach innen versetzt einen kreisförmigen Flammen-
Durchbruch 13c auf, benachbart zu dessen Begrenzung mehrere
über den Umfang verteilte, nach oben über den Mittelsteg 51
vorstehende Kochgefäß-Konsolen 52 vorgesehen sind, so daß
das jeweils benutzte Kochgefäß also mit Abstand oberhalb
des Schalenbodens der Platte 39c liegt und die Flammen nach oben entlang dem Gefäßboden durchschlagen können. Die Brennstelle für diese Kochstelle 8c ist durch einen gesonderten
Brennstoffträger 36c gebildet. Dieser Träger 36c ist etwa
U-förmig, wobei die oberen Schenkelenden nach außen derart
abgewinkelt sind, daß sie in zentrierter Lage des Träger 36c
gegenüber dem Durchbruch 13c an der Oberseite des Schalenbodens der Platte 39c aufliegen und sich der Quersteg des
Trägers für die Aufnahme von Brennstoff im Abstand unterhalb dieses Schalenbodens, jedoch oberhalb der Bodenplatte
15b befindet.

An den den Seitenwänden 11b des Gehäuses 2b zugehörigen
Schmalseiten sind die Schalenränder 53 der Platte 39c im
Querschnitt derart nach außen gekrümmt, daß sie an ihren
Außen- bzw. Unterseiten konkav gekrümmte Gegenschultern für
die Anlage an den Schultern 40b der Seitenwände 11b bilden.
Die rechtwinklig dazu liegenden Schalenränder 54 stehen
rechtwinklig zum Schalenboden und haben gleiche Höhe wie
die Schalenränder 53 können aber umlaufend auch gegenüber diesen
höher sein, so daß eine pfannenartig tiefe Grill-Platte gebildet ist.

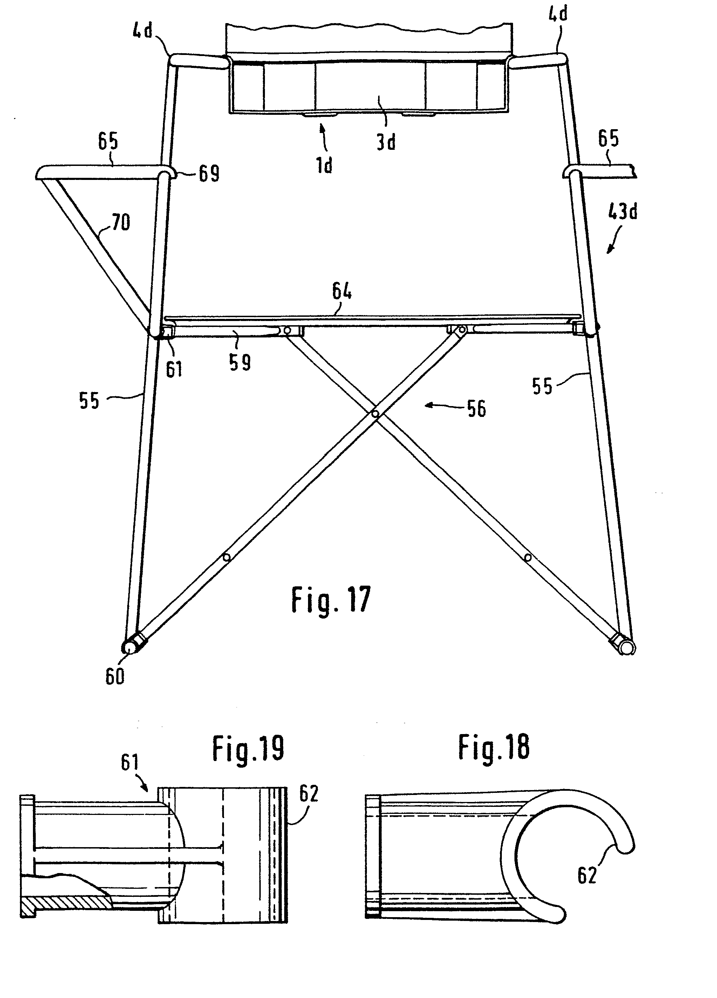

In den Figuren 16 und 17 ist ein Bodenständer 43d für das
Kochgerät 1d dargestellt, der im wesentlichen aus zwei
Seitenstützen 55 und mindestens einer, im dargestellten Ausführungsbeispiel zwei hintereinanderstehenden Kreuz- bzw.
Scherenverstrebungen 56 zusammengesetzt, sowie derart eben
zusammenklappbar ist, daß die Seitenstützen 55 aneinander
liegen. Jede Seitenstütze 55 ist im wesentlichen in einer
Ebene annähernd S-förmig mit im Winkel aneinanderschließenden Abschnitten aus Rohr gebogen und bildet mit
ihrem oberen, frei ausragenden Endschenkel ein Gegenglied
57 zum Einstecken des Standschenkel 48d des zugehörigen
Standfußes 4d. Der untere Endschenkel der in Vorderansicht geringfügig nach innen geneigten Seitenstützen 55
ist jeweils als Standschenkel vorgesehen. Zwischen diesem Standschenkel und dem etwa parallel dazu oberhalb der Mitte
der Höhe des Bodenständers 43d liegenden Zwischenschenkel
58 der jeweils anderen Seitenstütze 55 sind die einzelnen
Streben der Scherenverstrebungen 56 angeordnet. Die oberen
Enden der Einzelstreben jeder Scherenverstrebung 56 sind
an etwa horizontale Querstreben 59 angelenkt, welche jeweils vom oberen Ende der zugehörigen Einzelstrebe horizontal nach außen ragen und mit ihren äußeren Enden am
jeweils zugehörigen Zwischenschenkel 58 befestigt sind.

Zur gelenkigen Verbindung der unteren Enden der Einzelstreben
der Scherenverstrebung 56 mit den Standschenkeln 60 der
Seitenstützen 55 sowie der zugehörigen Enden der Querstreben 59 mit den Zwischenschenkeln 58 sind Verbindungsmuffen 61 vorgesehen, die lediglich durch Aufstecken an
den Enden der Einzel- und Querstreben befestigt sind. Diese
Verbindungsmuffen 61 weisen an den Rohrdurchmesser der
Seitenstützen 55 angepaßte federnde Schnappschalen 62 auf,
welche sich über einen Bodenwinkel von mehr als 180° erstrecken und unter Oberwindung eines Widerstandes derart
auf die Zwischenschenkel 58 und die Standschenkel 60 aufgesprengt werden können, daß sie diese sicher haltend umgreifen und trotzdem wieder von Hand lösbar sind. Die Querstreben 59 sind in der Standstellung gegenüber der jeweils
zugehörigen Einzelstrebe durch Anschlag festgelegt. Wie
Figur 16 zeigt, können die beiden Kreuzverstrebungen 56
auch durch Verbindungsstangen noch zusätzlich gegenseitig
verstrebt sein. Nach Lösen der Verbindungsmuffen 61 von
den Seitenstützen 55 können die Querstreben 59 nach unten
geschwenkt und die beiden Seitenstützen 55 mit ihren einander zugekehrten Seiten aneinander geklappt werden, so
daß sich ein sehr geringer Raumbedarf ergibt.

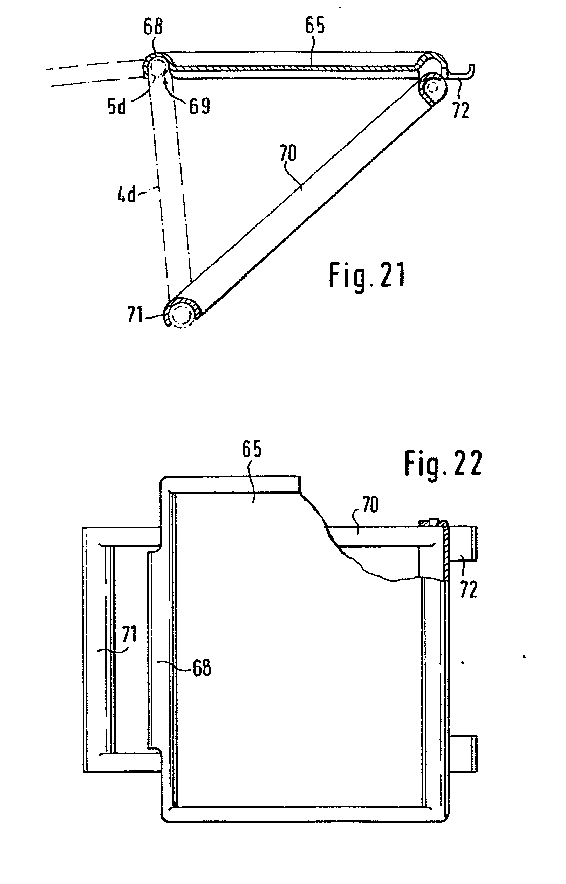

Wie die Figuren 16,17,20 und 21 weiterhin zeigen, kann sowohl der Bodenständer 43d als auch jeder Standfuß 4d eine Halterung für eine abnehmbare Ablageplatte, beispielsweise ein Tablett 63,64 gemäß den Figuren 16,17 und 20
oder eine Ablagekonsole 65 gemäß den Figuren 21 und 22
bilden. Die Tabletts 63,64 lassen sich in einfacher Weise
zwischen den Seitenstützen 55 des Bodenständers 43d anordnen, wobei jedes Tablett wahlweise auf den oberen Endschenkeln 57 oder auf den Zwischenschenkeln 58 angeordnet
werden kann. Das in Höhe der Zwischenschenkel 58 angeordnete Tablett 64 liegt im dargestellten Ausführungsbeispiel im wesentlichen nur auf den Querstreben 59 auf.
Das Tablett 63 weist an beiden Seiten profilierte Ränder
66 auf, die nach unten hohl sind und in welche die jeweils zugehörigen Schenkel der Seitenstützen 55 von unten
im wesentlichen formschlüssig eingreifen können, ohne daß
dadurch der Eingriff der Standfüße 4d des Kochgerätes 1d
beeinträchtigt wäre. Das Tablett 63 weist im dargestellten
Ausführungsbeispiel an der Unterseite Klappfüße 67 auf,
so daß es auch als selbststehendes Tischchen verwendet
werden kann.

Die Ablagekonsole 65 ist so ausgebildet, daß sie seitlich
über den Bodenständer 43d bzw. über die jeweils zugehörige
Seitenstütze 55 vorstehend als seitliche Ablage angebracht
werden kann. Sie weist ebenfalls einen als nach unten
offenes Hohlprofil ausgebildeten Rand 68 zum Umgreifen
des jeweiligen Schenkels auf, der gemäß Figur 17 durch
einen Schenkel der jeweiligen Seitenstütze 55 oder gemäß
Figur 21 durch den Anschlußschenkel 5d des jeweiligen Standfußes 4d gebildet sein kann. Zweckmäßig ist der Rand 68
ebenso wie der jeweilige Rand 66 so ausgebildet, daß er
nach Art einer Schnappverbindung federnd rastend in den
zugehörigen Schenkel eingreift und damit ein Formschlußglied 69 zur sicheren Verbindung mit diesem Schenkel bildet.
Zur Abstützung gegenüber dem jeweils darunterliegenden
Schenkel der Seitenstütze bzw. des Standfußes weist die Ablagekonsole einen Strebenrahmen 70 auf, der im Bereich der vom Formschlußglied 69 abgekehrten Seite der Ablagekonsole 65 angelenkt und an seinem freien Ende mit einem entsprechend dem Formschlußglied 69 ausgebildeten Formschlußglied 71 für den rastenden Eingriff in den zugehörigen Schenkel versehen ist. Der Strebenrahmen 70 ist gegen die Unterseite der Ablagekonsole 65 schwenkbar, die an ihrer vom Formschlußglied 69 abgekehrten Seite Hakenglieder 72 zum Einhängen von Kochgututensilien aufweisen kann.

In den Figuren 23 und 24 ist ein noch weiter vereinfachter Bodenständer 43e dargestellt, der besonders einfach zusammengelegt und aufgeschlagen werden kann. Die Seitenstützen 55e dieses Bodenständers 43e sind vollständig voneinander sowie von der Scherenverstrebung 56e lösbar, da die Enden der Einzelstreben der Scherenverstrebung 56e, die mit Verbindungsmuffen 61e gemäß den Figuren 18 und 19 versehen sind, zum Zusammenlegen vollständig von den Seitenstützen 55e gelöst werden. Demgegenüber können die Verbindungsmuffen 61 bei der Ausführungsform gemäß den Figuren 16 und 17 nach Art von Lagerschalen auch unlösbar, jedoch schwenkbar in die zugehörigen Schenkel der Seitenstützen 55 eingreifen. Die Einzelstreben der Scherenverstrebung 56e sind an ihrer Kreuzungsstelle gelenkig miteinander verbunden. Zweckmäßig sind die Standfüße 4e so am Gehäuse 2e des Kochgerätes 1e gelagert, daß sie in entspanntem Zustand einen kleineren oder größeren Abstand voneinander haben als die oberen, als Gegenglieder 57e dienenden Endschenkel der Seitenstützen 55e, so daß diese Endschenkel nach dem Einsetzen der Standfüße 4e gegenüber diesen und gegeneinander verspannt werden, wodurch selbst bei sehr leichter Bauweise des Bodenständers 43e ein sicherer Stand erzielt werden kann.

Bei Verwendung zum Räuchern gemäß Fig. 12 wird zweckmäßig unter dem Rost 50 eine Fettwanne 73 angeordnet, welche auf der Platte steht und auch für die Aufnahme des Räuchermittels vorgesehen sein kann, so daß die Platte 39b nicht verschmutzt.

Statt oder zusätzlich zum Betrieb mit Trockenbrennstoff ist es auch denkbar, in dem Brennraum 3 bzw. eingehängt in eine Öffnung von dessen Bodenplatte oder auf dem entsprechend tiefer gestalteten Träger 36c einen Flüssigbrennstoff-Brenner, beispielsweise einen Spiritusbrenner anzuordnen.

Auch für Trockenbrennstoff kann ein gesonderter Brenner vorgesehen sein, der vorzugsweise eine Brennstoff-Zuführung bzw. einen Brennstoff-Nachschub aufweist. Dieser Nachschub erfolgt zweckmäßig selbständig entsprechend dem Abbrand. Bei einer vorteilhaften Ausführung ist der Brenner gemäß der deutschen Patentanmeldung P 33 33 197.9 ausgebildet, auf die wegen weiterer Merkmale und Wirkungen bezug genommen wird.

Das erfindungsgemäße Kochgerät ist insbesondere in vorteilhafter Weise als transportables Leichtgerät auszubilden, das, beispielsweise für Campingzwecke, von einer Person ohne weiteres getragen werden kann.

Des weiteren ergibt sich eine vorteilhafte Ausgestaltung, wenn der jeweilige Standfuß 4b hinsichtlich seiner Neigung gegenüber dem Brennraum 3b eingestellt werden kann, was beispielsweise durch verstellbare Ausbildung des durch den Anschlagbolzen 34b gebildeten Anschlages erreicht werden kann. Bei einer einfachen Ausführung ist der Anschlagbolzen 34b durch eine Exzenterschraube oder dgl. gebildet, deren den Anschlag bildender

0173970

Kopf exzentrisch zu dem im Steckzapfen 31b geführten
Schaft liegt. Der Steckzapfen 31b oder der gesamte
Standfuß 4b kann auch aus Stangenmaterial mit Vollquerschnitt gefertigt sein.

------------

Anmelderin:     Erich Schumm GmbH
                Erich-Schumm-Straße 2-4
                D-7157 Murrhardt/Württ.


Kochgerät, insbesondere Grillgerät

A n s p r ü c h e

— — — — — — — — —


1. Kochgerät, insbesondere tragbares Grillgerät, mit einem Brennraum für Brennstoff und mit einer über dem
Brennraum liegenden Kochgutstelle, dadurch gekennzeichnet, daß der Brennraum (3) zwischen einer benachbart
zu einer Außenkante der Kochgutstelle (8,10) liegenden
Brennstelle (37,36) und einer Einlaßöffnung (27) eines
die Kochgutstelle (8,10) nach oben überragenden Kamines (6) eine entlang der Unterseite der Kochgutstelle
(8,10) verlaufende Verbrennungs-Gasführung (35) aufweist.


2. Kochgerät, insbesondere nach Anspruch 1, dadurch gekennzeichnet, daß der an der Vorderseite über die gesamte
Breite und/oder Höhe offene Brennraum (3) horizontal
flach mit zueinander etwa paralleler Deckwand (8 bzw.
10) und Bodenwand (10 bzw. 8) ausgebildet ist, wobei
die insbesondere durch eine Kochgut-Platte gebildete
Kochgutstelle (8 bzw. 10) unmittelbar eine Wandung des
Brennraumes (3) bildet und/oder wenigstens annähernd
dessen Grundriß gleicht, daß die Brennstelle (36 bzw.
37) am vorderen Ende des Brennraumes (3) und die Einlaßöffnung (27) des Kamines (6) an dessen ansonsten
geschlossener Rückseite liegt, daß vorzugsweise der

0173970

Abstand zwischen Brennstelle (36 bzw. 37) und Einlaßöffnung (27) größer als die Erstreckung der Brennstelle (36 bzw. 37) in Richtung zur Einlaßöffnung (27) ist
und daß die Brennstelle (36a) in ihrer Breitenrichtung
eine größere Erstreckung als quer dazu hat, insbesondere
über einen großen Teil der Breite des Brennraumes (3a)
reicht und/oder in dieser Breitenrichtung schmaler als
die Einlaßöffnung (27a) ist.

3. Kochgerät, insbesondere nach Anspruch 1 oder 2, dadurch
gekennzeichnet, daß der Brennraum (3b) seitlich durch
mindestens eine gegenüber der zugehörigen Seitenbegrenzung der Kochgutstelle nach innen versetzte, annähernd
über die ganze Höhe des Brennraumes (3b) reichende,
Abschirmung (44), insbesondere ein in einem Brennraum-
Gehäuse (2b) einen Hohlraum (46) abtrennendes Kastenprofil (45) begrenzt ist, daß die Brennstelle (36 bzw.
37) für die Aufnahme von Trockenbrennstoff in etwa vorgegebener Stückform, wie Trockenspiritus o.dgl., durch
eine Flachschale (14,20) gebildet ist, die vorzugsweise mit Schiebeführungen (19) herausnehmbar in dem Brennraum (3) angeordnet ist, und daß die jeweilige Schiebeführung (19) insbesondere eine mit Führungsrändern
(16) über die seitlichen Begrenzungen der Brennstelle
(36) vorstehende Bodenplatte (15) und Führungsnuten
(17) aufweist, die durch an den Innenseiten der Seitenwände (11) des Brennraumes (3) befestigte Winkelprofile (18) gebildet sind.

4. Kochgerät, insbesondere nach einem der Ansprüche 1 bis
3, dadurch gekennzeichnet, daß die Kochgutstelle (10)
seitlich und/oder hinten von einem nach oben vorstehenden Rand (12) begrenzt ist, der vorzugsweise durch Fortsätze der Seitenwände (11) bzw. der Rückwand (7) des
Brennraumes (3) und/oder durch Randstege der Kochgut-
Platte gebildet ist, daß vorzugsweise die Seitenwände
(11a) des Brennraumes (3a) im oberen Bereich in nach
außen gerichtete Auflage-Schultern (40) für die Platte
(39) übergehen und daß die Kochgutstelle (8a) durch
mindestens eine auswechselbar auf die Oberseite des
Brennraumes (3a) als dessen obere Wandung auflegbare
Platte (39) wie eine Flachschale gebildet ist, wobei
mindestens eine Platte (39c) eine Kochstelle mit einem
Flammen-Durchbruch (13c) zum Brennraum (3b) aufweist
und/oder wenigstens auf einem Teilfeld als geschlossene
Grillplatte (10c) ausgebildet ist.

5. Kochgerät, insbesondere nach einem der Ansprüche 1 bis
4, dadurch gekennzeichnet, daß als Räucheraufsatz für
die Kochgutstelle eine Abdeckhaube (49) vorgesehen ist,
welche abnehmbar, insbesondere im Bereich des Randes
der Kochgut-Platte (39b), aufsteht und der vorzugsweise ein auf die Kochgut-Platte (39b) mit Höhenabstand
stellbarer Gitterrost (50) zugeordnet ist.

6. Kochgerät, insbesondere nach einem der Ansprüche 1 bis
5, dadurch gekennzeichnet, daß der um eine horizontale
Achse um etwa 180° in zwei Arbeitslagen umschlagbare
Brennraum (3) an beiden etwa horizontalen Außenseiten
jeweils eine Kochgutstelle (8) als Kochstelle für Töpfe, Pfannen o.dgl. und eine Kochgutstelle (10) als geschlossene Grillplatte aufweist.

7. Kochgerät, insbesondere nach einem der Ansprüche 1 bis
6, dadurch gekennzeichnet, daß der Kamin (6b) in mindestens eine Schiebeführung (21b) des Brennraumes (3b)
herausziehbar eingesteckt ist, insbesondere in zwei
jeweils einer der beiden Kochgutstellen (8,10) zugehörige Stellungen anschlagbegrenzt in beide Enden der Schiebeführung (21) an der Außenseite des Brennraumes (3)
derart einsetzbar ist, daß seine Einlaßöffnung (27)
in beiden Stellungen in Deckung mit einer Öffnung in
der zugehörigen Seite des Brennraumes (3) liegt, daß
vorzugsweise der Kamin (6) durch ein U-Profil mit nach
außen abgewinkelten Profilschenkeln (23,24) und durch
eine zur Bildung des am Umfang geschlossenen Kaminschachtes (30) diese Profilschenkel (23,24) unter Freilassung
der Einlaßöffnung (27) verbindende Deckplatte (25) gebildet ist, welche insbesondere mit einem unteren, abgewinkelten Endstreifen einen Anschlag (26) für die
Auflage auf der jeweiligen Kochgutstelle (8 bzw. 10)
bildet und daß vorzugsweise die Profilschenkel (24)
als Gleitleisten für den Eingriff in seitliche Führungsschlitze des Brennraumes (3) ausgebildet sind.

8. Kochgerät, insbesondere nach einem der Ansprüche 1 bis
7, dadurch gekennzeichnet, daß beiderseits an der Außenseite des Brennraumes Standfüße (4) und/oder Traggriffe (5) vorgesehen sind, die vorzugsweise zur Zuordnung
zur jeweiligen Kochgutstelle (8,10) umsetzbar gehaltert
sind, wobei vorzugsweise an der Außenseite des Brennraumes (3) an beiden Enden offene Steckmuffen (33) für
den Eingriff von Steckzapfen (31) der Standfüße (4) und/oder der Traggriffe (5) vorgesehen sind und die Steckmuffen (33) in Arbeitslage auf Anschlagschultern (34) der jeweils zugehörigen, miteinander integrierten Standfüße (4) und Traggriffe (5) aufsitzen.

9. Kochgerät, insbesondere nach einem der Ansprüche 1 bis 8, dadurch gekennzeichnet, daß beiderseits an der Außenseite des Brennraumes (3b) vorgesehene Standfüße (4b) gegen die Außenseite des Brennraumes (3b) aus der Standstellung schwenkbar gelagert sind und vorzugsweise mit unteren Standschenkeln (48) Kupplungsglieder (57) eines zusammenlegbaren Bodenständers (43d) bilden, wobei der jeweilige Standfuß (4b) insbesondere durch zwei, einen gemeinsamen Anschlußschenkel (5b) aufweisende, im Winkel zueinander liegende U-förmige Bügel gebildet ist und daß vorzugsweise der Bodenständer (43d) zwei in Seitenansicht mehrfach entgegengesetzt abgewinkelte Seitenstützen (55) aufweist, deren obere rohrförmige, etwa horizontale Endschenkel (57) als Steckbuchsen für die Standschenkel (48d) der Standfüße (4d) des Brennraumes (3d) ausgebildet sind und die über gelenkige Streben, insbesondere eine lösbare Scherenverstrebung (56) zusammenlegbar miteinander verbunden sind.

10. Kochgerät, insbesondere nach Anspruch 8 oder 9, dadurch gekennzeichnet, daß die Standfüße (4d) des Brennraumes (3d) und/oder der Bodenständer (43d) mindestens eine Halterung für eine abnehmbare Ablageplatte, wie ein zwischen den Seitenstützen (55) liegendes Tablett (63, 64), eine seitlich über den Brennraum (3d) vorstehende Ablagekonsole (65) o.dgl. bilden, daß vorzugsweise eine Halterung durch die oberen Endschenkel (57) der Seitenstützen (55) und/oder eine Halterung durch zwischen den oberen und unteren Enden der Seitenstützen (55) liegende, etwa horizontale Zwischenschenkel (58) gebildet ist und daß insbesondere die Ablagekonsole (65)

0173970

ein Formschlußglied (69) für die umgreifende Auflage
auf einem etwa horizontalen Schenkel eines Standfußes
(4d) bzw. einer Seitenstütze (55) und einen gegen ihre
Unterseite schwenkbaren Strebenrahmen (70) mit einem
Formschlußglied (71) für den lösbaren Anschluß an einem darunter liegenden Schenkel aufweist.

11. Kochgerät, insbesondere nach einem der Ansprüche 1 bis
    10, dadurch gekennzeichnet, daß die Kochgutstelle als
    mit Sicken oder ähnlichen Profilierungen versehene Platte
    und/oder als dicke Platte (39b) beispielsweise aus Aluminium und/oder als schwarz beschichtete Platte und/oder
    als Blech-bzw. Gußplatte ausgebildet ist.

– – – – – – – – –

Fig. 1

Fig. 5

Fig. 2

Fig. 4

Fig. 3

0173970

Fig. 6

**Fig. 7**

Fig. 8

0173970

Fig. 9

0173970

Fig. 10

Fig. 11

Fig. 12

**Fig.14**

**Fig.13**

**Fig.15**

**Fig. 16**

Fig. 17

Fig.19

Fig.18

Fig. 20

Fig. 21

Fig. 22

1e

2e

57e

48e

**Fig. 23**

58e

43e

56e

61e

60e

57e

55e

61e

58e

56e

60e

Fig. 24